# EUROPEAN PATENT APPLICATION

(11) **EP 2 059 080 A1**
(43) Date of publication of application: **13.05.2009**
(21) Application number: 07425703.1
(22) Date of filing: 09.11.2007
(51) Int. Cl.: H04W 36/34

(54) **Support of BS controlled MS initiated handover in IEEE 802.16REV2 based systems**

(71) Applicant: Nokia Siemens Networks S.p.A., 20126 Milano (IT)
(72) Inventor: Rastelli, Marco, 20090 Cesano Boscone (IT); Tortora, Daniele, 20099 Sesto s. Giovanni (MI) (IT)
(74) Representative: Fischer, Michael

(57) **Abstract**

A method to coordinate MS initiated handover process and BS initiated handover process in IEEE802.16Rev2 based systems.

## Description

The invention applies to a Mobile Wireless Broadband Access network conforming to IEEE 802.16Rev2 specification (Revision of IEEE Std 802.16-2004 as amended by IEEE Std 802.16f-2005 and IEEE Std 802.16e-2005)

At present IEEE802.16Rev2/D1 [1] specification supports both MS initiated handover and BS initiated handover. However the current specification does not allow using BS initiated handover mechanism alone: MS initiated handover cannot be disabled in the system when BS initiated HO is used. Also MS initiated handover mechanism has always precedence in case of MS initiated handover decision and BS initiated handover decision occurs at the same time.

The behaviour described above leads to high risk of system instability when BS initiated handover feature is enabled in the system. Different handover algorithms and criteria are typically used at the BS side and at the MS side. MS initiated handover aims at individual link optimisation by taking into account channel quality state at the MS receiver. BS initiated handover has a wider scope, since BS can take into account overall network resources status when taking the handover decision. BS may typically command handover toward a target BS which is not the best serving cell in order to free valuable radio resources on the best serving cell (e.g. in case of Underlay/Overlay cell scenario). MS may immediately trigger handover back to the best serving cell and so on.

The aforementioned problem has not been solved up to now in [1]. In order to avoid system instability it has to be ensured that MS initiated handover and BS initiated handover processes are coordinated.

The invention proposes a new method to coordinate MS initiated handover process and BS initiated handover process, in such a way the two procedures can be supported together in the system. The new mechanism proposed is named "BS Controlled MS initiated handover". In order to define such a mechanism this invention introduces some modifications in section 6.3.22.2.2 and other related sections of [1].

The new mechanism is realized as described in the following paragraphs.

The BS shall set MS initiated HO trigger event via Trigger TLV in DCD message (described in section 11.4.1 of [1]) or via Neighbor BS Trigger TLV in MOB-NBR-ADV message (described in section 11.18.2 of [1]). Trigger TLV and Neighbor BS Trigger TLV allow configuring the conditions under which a handover can be initiated by MS.

The HO shall always proceed with a notification through either MOB_MSHO-REQ or MOB_BSHO-REQ messages.

MS shall send MOB_MSHO-REQ only in case a trigger conditions specified in Trigger TLV or Neighbor BS Trigger TLV has occurred.

MS actual pursuit of HO to one of BSs specified in MOB_BSHO-RSP is required, apart from those cases stated in next paragraph.

MS may decide to attempt HO to a BS not included in MOB_BSHO-RSP, sending a MOB_HO-IND indicating the selected BS, only in case a trigger condition specified in Trigger TLV or Neighbor BS Trigger TLV has occurred for that target BS.

By means of the new mechanism the system behavior in case of handover is modified as described in the following paragraphs.

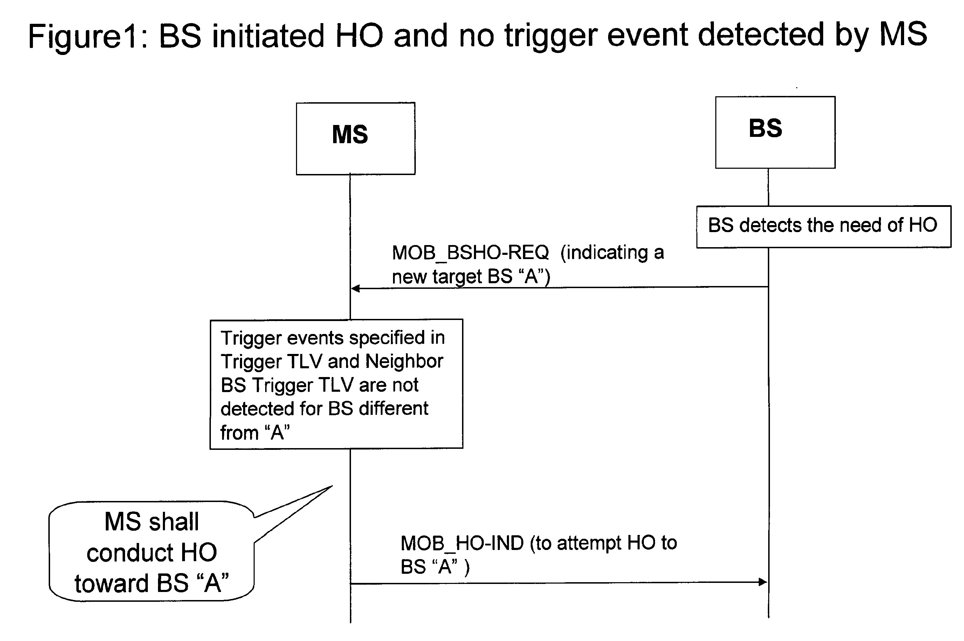

As described in Figure 1, when HO is initiated by BS (serving BS sends MOB_BSHO-REQ) and MS does not detect trigger conditions for a target BS not included in MOB_BSHO-REQ, MS shall conduct HO toward target BS indicated by serving BS (MS sends MOB_HO-IND indicating a BS included in MOB_BSHO-REQ).

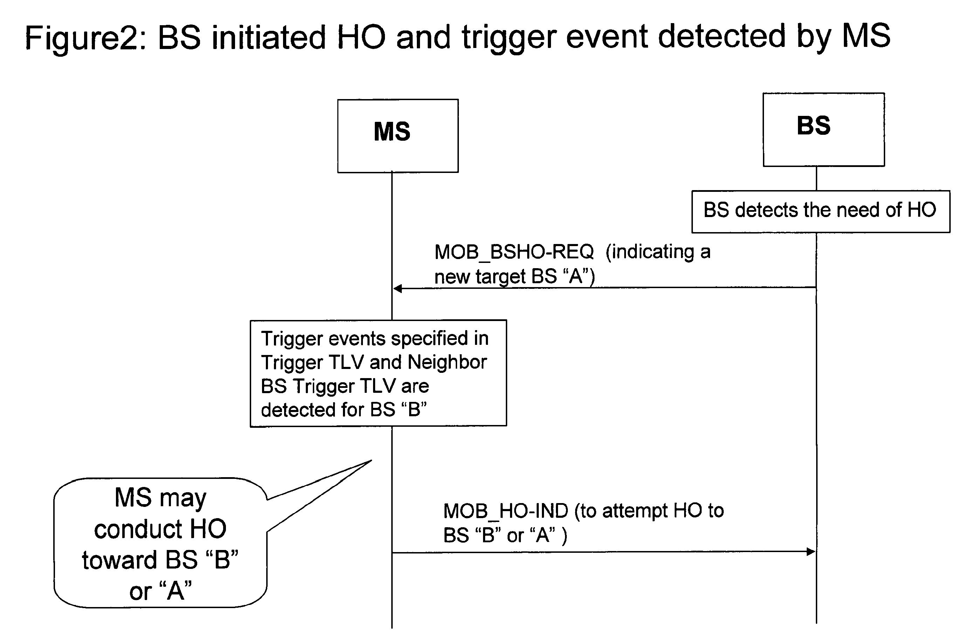

As described by Figure 2, when HO is initiated by BS (serving BS sends MOB_BSHO-REQ) and MS detects trigger conditions for a target BS not included in MOB_BSHO-REQ, MS may conduct HO toward a target BS indicated by serving BS (MS sends MOB_HO-IND indicating a BS included in MOB_BSHO-REQ) or toward the target BS for which trigger condition is met (MS sends MOB_HO-IND indicating the BS for which trigger condition is met).

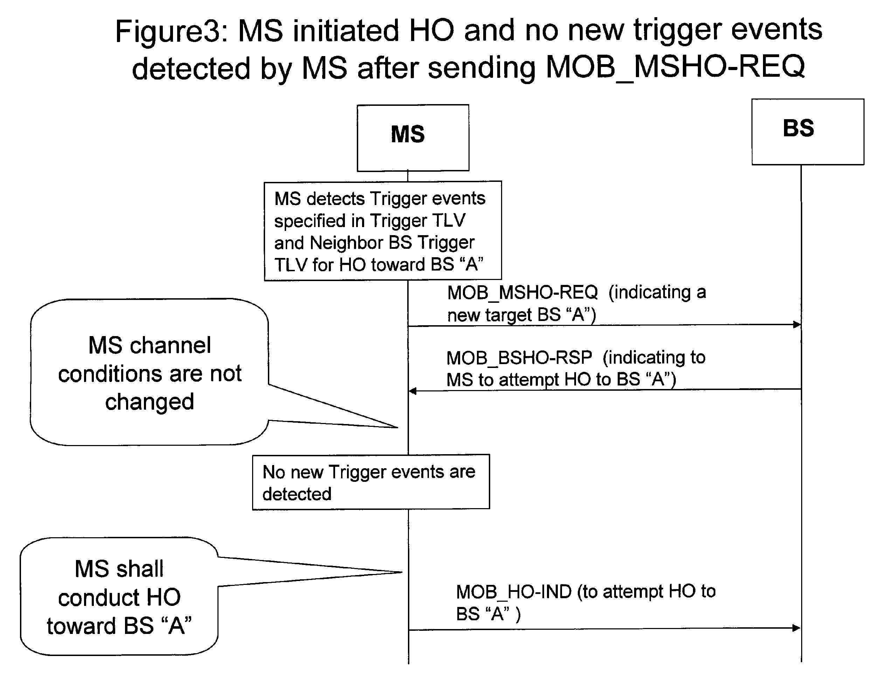

As described by Figure 3, when HO is initiated by MS (trigger condition is met and MS sends MOB_MSHO-REQ) and after MOB_BSHO-RSP the MS does not detect new trigger conditions (channel conditions are not changed), MS shall conduct HO toward a target BS for which trigger condition is met (MS sends MOB_HO-IND indicating the BS for which trigger condition is met).

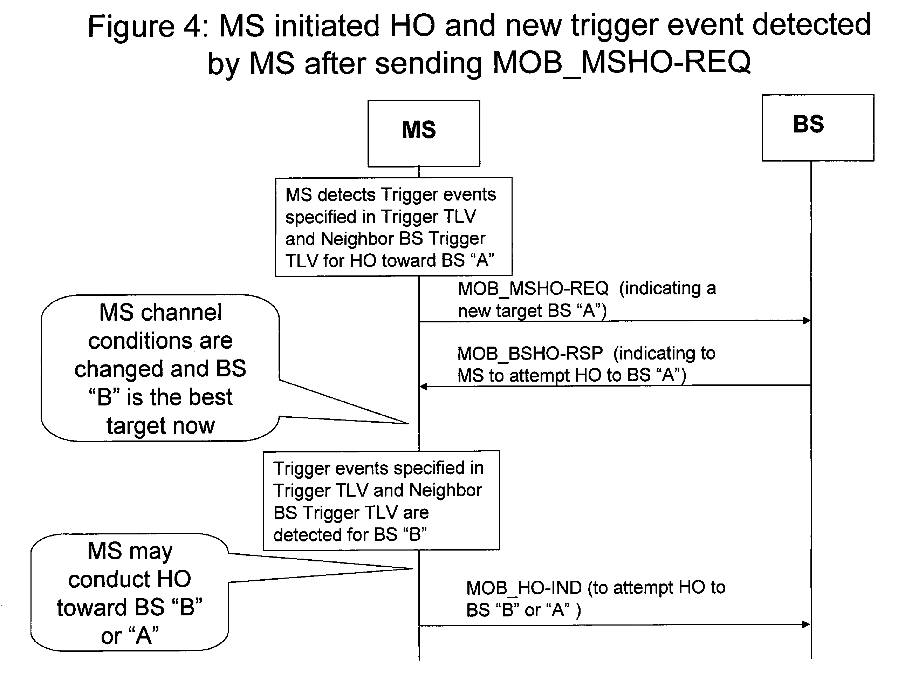

As described in Figure 4, when HO is initiated by MS (trigger condition is met and MS sends MOB_MSHO-REQ) and after MOB_BSHO-RSP the MS detects new trigger conditions (channel conditions are changed), MS may conduct HO toward target BS for which the first trigger condition is met (MS sends MOB_HO-IND indicating the BS for which the first trigger condition is met) or toward target BS for which the second trigger condition is met (MS sends MOB_HO-IND indicating the BS for which the second trigger condition is met)

The advantage is that the new mechanism allows Mobile WiMAX systems to support BS initiated handover feature without risks of system instability. BS initiated handover is a basic functionality needed to support value added features as Multicarrier networks, Overlay/Underlay cells and Layered networks (micro/macro cells).

Large capacity networks can be obtained by deploying layered network structures. A certain geographical location can be served by signals from few cells presenting different radio channel conditions (e.g. small/large cells, micro/macro cells). In a similar scenario the MS may regularly tend to select larger cells as a target cell for handover since they provide best radio channel conditions, leaving the smaller cells unloaded. BS initiated handover can be used to the purpose of distributing traffic load efficiently from network and spectrum resource perspective. The invention allows ensuring that the BS initiated decision is enforced at the MS side and that it is not wiped off by a subsequent decision from the MS to handover back to the old serving cell.

In the following proposed modifications to be introduced in [1] are described.

Enhancement of subsection 6.3.2.3.5, "Ranging request (RNG-REQ) message": a new parameter BS_Controlled_MSHO is introduced in Table 622 "RNG-REQ" message encodings. The parameter defines if BS Controlled MS initiated handover is supported by the MS.

Enhancement of subsection Table 615 "DCD channel encoding": a new value is introduced for HO type support TLV. Bit 3 is named BS_Controlled_MSHO. BS_Controlled_MSHO flag is used to indicate support of BS Controlled MSHO mechanism in the cell.

Amendment of subsection 6.3.22.2.2, "HO decision and initiation", as reported in the following sentences.

In case of MS initiated HO, HO initiation and notification mode depends on the settings of BS_Controlled_MSHO flag in HO type support field of DCD message and from BS_Controlled_MSHO field in RNG-REQ message. In case BS_Controlled_MSHO field is not included in RNG-REQ message the default value "0" shall be applied.

If BS_Controlled_MSHO flag is set to "0" in HO type support field of DCD message or Value field of BS_Controlled_MSHO in RNG-REQ message is set to "0", the HO may proceed with a notification through either MOB_MSHO-REQ or MOB_BSHO-REQ messages. The HO notification is recommended, but not required. Acknowledgement of MOB_MSHO-REQ with MOB_BSHO-RSP is required.

If BS_Controlled_MSHO flag is set to "1" in HO type support field of DCD message and Value field of BS_Controlled_MSHO in RNG-REQ message is set to "1", HO notification is required. The HO shall proceed with a notification through either MOB_MSHO-REQ or MOB_BSHO-REQ messages. Acknowledgement of MOB_MSHO-REQ with MOB_BSHO-RSP is required. MS shall send MOB_MSHO-REQ only in case a triggering conditions specified in Trigger TLV or Neighbor BS Trigger TLV has occurred.

If BS_Controlled_MSHO flag is set to "0" in HO type support field of DCD message or Value field of BS_Controlled_MSHO in RNG-REQ message is set to "0", MS actual pursuit of HO to one of BSs specified in MOB_BSHO-RSP is recommended, but not required. MS may decide to attempt HO to a different BS that may or may not have been included in MOB_BSHO-RSP.

If BS_Controlled_MSHO flag is set to "1" in HO type support field of DCD message and Value field of BS_Controlled_MSHO in RNG-REQ message is set to "1", MS actual pursuit of HO to one of BSs specified in MOB_BSHO-RSP is required. MS may decide to attempt HO to a BS not included in MOB_BSHO-RSP, sending a MOB_HO-IND indicating the selected BS, only in case a triggering condition specified in Trigger TLV or Neighbor BS Trigger TLV has occurred for that target BS.

If BS_Controlled_MSHO flag is set to "0" in HO type support field of DCD message or Value field of BS_Controlled_MSHO in RNG-REQ message is set to "0", Aan MS required to conduct HO is not restricted to conducting HO to those BS included in the notifying message. In other words, the MS may attempt HO to a different BS that may or may not have been included in either the MOB_BSHO-REQ or MOB_BSHO-RSP.

If BS_Controlled_MSHO flag is set to "1" in HO type support field of DCD message and Value field of BS_Controlled_MSHO in RNG-REQ message is set to "1", an MS required to conduct HO is restricted to conducting HO to those BS included in the notifying message. In other words, the MS may not attempt HO to a BS not included in the MOB_BSHO-REQ or in the MOB_BSHO-RSP unless a trigger event specified in Trigger TLV or Neighbor BS Trigger TLV is detected for that target BS.

### References

[1] IEEE Computer Society and IEEE Microwave Theory and Techniques Society, "DRAFT Standard for Local and Metropolitan Area Networks Part 16: Air Interface for Broadband Wireless Access Systems", P802.16Rev2/D1 (October 2007) Revision of IEEE Std 802.16-2004 as amended by IEEE Std 802.16f-2005 and IEEE Std 802.16e-2005.

## Claims

1. A method to coordinate MS initiated handover process and BS initiated handover process in IEEE802.16Rev2 based systems.
